# EUROPEAN PATENT SPECIFICATION

(11) **EP 1 031 618 B1**
(45) Date of publication and mention of the grant of the patent: **28.04.2004**
(21) Application number: 99102754.1
(22) Date of filing: 22.02.1999
(51) Int. Cl.: C09J 7/00, C09J 5/06, B63H 9/06

(54) **Room temperature curing tape**
Bei Raumtemperatur vernetzbares Klebeband
Bande adhésive réticulante à température ambiante

(43) Date of publication of application: 30.08.2000
(73) Proprietor: Dimension-Polyant GmbH, 47803 Krefeld (DE)
(72) Inventor: Cederschiöld, Peder, 131 50 Saltsjö-Duvnäs (SE); Dolk, Ake, 142 43 Skogas (SE)
(74) Representative: Klingseisen, Franz, Dipl.-Ing.

(56) References cited:
- EP-A- 0 529 840
- WO-A-91/15530
- WO-A-93/01247
- US-A- 3 974 791
- US-A- 4 453 997

## Description

It is known that adhesive bonding is used in a very large number of constructions. For the person who gets interested in adhesive bonding, it will soon be apparent that the adhesive must be in contact with the surface in a liquid state, to achieve wetting and adhesion.
The adhesive must naturally also transfer from a liquid to a solid state in order to withstand loading.

*Adhesives transfer from liquid to solid form by any of the following ways:*
1. By drying, when solvent or water evaporates.
2. Components in the adhesive react chemically (polymerise) to bigger molecules. This can occur when two or more components are mixed, by heating, by exposure to moisture or by initiation of the process i. e. by exposure to UV-light.
3. The adhesive is fluent in a melted state and solid when cooled.

There are also combinations of the three principals. There are for instance hot melts that cure (polymerise) in contact with moisture.

Double sticking tape is a way of bonding that permits very short fixation time. The binder in tape consists of very slowly fluent liquids and is not changed by drying or polymerisation after application. (Double sticking tape could be explained as "drying adhesives that don't dry"). Parts bonded with tape can therefore not be loaded for a long time without rupture.

Double sticking tape is used to bond thin steel sheet when the load is low.
When sails are made, double sticking tapes are used to fix the parts (panels) during sewing. Double sticking tape alone is not sufficient.

There is double sticking tape, containing reactive material, that can be cured by heat. The curing temperature is about 150°C. There are also adhesive films that when heated become sticky and tape-like. To achieve curing of those tapes they have to be heated for quite a long time (several minutes).

Moisture curing hot melts are used for bonding of sails. That has so far mostly meant that the panels are fixed by a narrow, common double sticky tape and then bonded with a heated, moisture curing hot melt, applied parallel to the tape, from a cartridge. That results in strong bonded sails. The method is mostly manual and very dependent on the worker's skill and care. It is also relatively time consuming.

The present invention means a method and material that gives the possibility to use moisture curing hot melt as a double sticking tape.

A moisture curing hot melt, that after cooling has a tape-like character (sticky) for some hours, is applied on a material where it does not strongly adhere. The adhesive can then be used as a double sticking tape. Curing occurs by the influence of the moisture in air.

Alternatively and more rationally the tape can be wound in rolls and be stored for a long time (months). That can be accomplished by packing the tape in vacuum together with a moisture absorptive and possibly also by deep-freezing. For later use the package is then permitted to achieve room temperature, after which it is opened and used before it is cured by moisture.

For many materials and designs the strength that is achieved by applying the invented tape in room temperature is satisfactory. When bonding highly loaded designs (e.g. sails) it has been shown that a reactivating (heating) gives the bond higher strength. Heating can be achieved by contact (heat pressing) or by exposure to short wave radiation (microwaves) and then pressing the materials together. An adhesive temperature around 85°C is shown to give strong enough bonds.

By using the reactive hot melt as a tape the evaporation of isocyanates is substantially reduced during use of tne adhesive.

## Claims

1. Method for joining the surfaces of highly loaded sails with a moisture curing hot melt wherein
the hot melt is heated and formed to a tape-like string of adhesive on a material to which it does not adhere strongly,
the tape-like string of adhesive is packed and stored separate from moisture to keep a sufficient tack until used, and
the tape-like string of adhesive is placed between the surfaces to be joined, distinguished in that use is made of a tape-like string of adhesive in the form of a double sticking tape, wherein the hot melt is a reactive hot melt with a content of isocyanates, and in that the string of adhesive is reactivated by heat or by microwaves or with ultrasonic vibrations.

2. A method according to claim 1 wherein a room temperature curing tape is used.

## Patentansprüche

1. Verfahren zum Aneinanderfügen der Oberflächen von hochbelasteten Segeln mit einem feucht abbindenden Heißkleber, wobei
der Heißkleber erhitzt und in einen bandartigen Strang von Klebstoff auf einem Material ausgebildet wird, an welchem er nicht stark anhaftet,
der bandartige Strang von Klebstoff gepackt und abgetrennt von Feuchtigkeit gelagert wird, um bis zur Verwendung eine hinreichende Haftung zu halten, und
der bandartige Strang von Klebstoff zwischen die zu verbindenden Oberflächen platziert wird, dadurch ausgezeichnet, dass ein bandartiger Strang von Klebstoff in Form eines doppelt klebenden Bandes verwendet wird, wobei der Heißkleber ein reaktiver Heißkleber mit einem Anteil von Isocyanaten ist, und dadurch, dass der Strang von Klebstoff durch Hitze oder durch Mikrowellen oder mit Ultraschallschwingungen reaktiviert wird.

2. Verfahren gemäss Anspruch 1, wobei ein bei Raumtemperatur abbindendes Band verwendet wird.

## Revendications

1. Procédé pour assembler les surfaces de voiles de bateaux soumises à des contraintes élevées avec une substance thermofusible réticulant à l'humidité,
dans lequel
la substance thermofusible est chauffée et configurée en un cordon en forme de bande de matière adhésive sur un matériau auquel elle n'adhère pas fortement,
le cordon en forme de bande de substance adhésive est conditionné et stocké à l'abri de l'humidité pour conserver une adhésivité suffisante jusqu'à son utilisation, et
le cordon en forme de bande de substance adhésive est placé entre les surfaces à assembler,
**caractérisé en ce que** l'on utilise un cordon de substance adhésive en forme de bande à double adhérence, la substance thermofusible étant une matière thermofusible réactive ayant une teneur en isocyanates, et **en ce que** le cordon de substance adhésive est réactivé par la chaleur ou par des micro-ondes ou par des vibrations ultrasonores.

2. Procédé selon la revendication 1, dans lequel on utilise une bande réticulant à température ambiante.
